# EUROPÄISCHE PATENTSCHRIFT

(11) **EP 2 460 337 B1**
(45) Veröffentlichungstag und Bekanntmachung des Hinweises auf die Patenterteilung: **17.08.2016**
(21) Anmeldenummer: 10722694.6
(22) Anmeldetag: 28.05.2010
(51) Int. Cl.: H04W 4/04, H04W 12/00, H04L 29/08, G08G 1/16, G08G 1/0967

(54) **VERFAHREN UND VORRICHTUNG ZUR KOMMUNIKATION MIT EINEM ANDEREN FAHRZEUG ODER MIT EINER INFRASTRUKTUREINRICHTUNG**
METHOD AND DEVICE FOR THE COMMUNICATION WITH ANOTHER VEHICLE OR WITH AN INFRASTRUCTURE DEVICE
PROCÉDÉ ET DISPOSITIF PERMETTANT DE COMMUNIQUER AVEC UN AUTRE VÉHICULE OU AVEC UN DISPOSITIF D'INFRASTRUCTURE

(30) Priorität: 04.06.2009 DE 102009026760
(43) Veröffentlichungstag der Anmeldung: 06.06.2012
(73) Patentinhaber: Continental Teves AG & Co. oHG, 60488 Frankfurt (DE)
(72) Erfinder: STÄHLIN, Ulrich, 65670 Eschborn (DE); SWOBODA, Adam, 64521 Groß-Gerau (DE); GROTENDORST, Thomas, 65760 Eschborn (DE); THUR, Christian, 65207 Wiesbaden (DE)
(74) Vertreter: Bonn, Roman Klemens
(86) Internationale Anmeldenummer: PCT/EP2010/057501
(87) Internationale Veröffentlichungsnummer: WO 2010/139649

(56) Entgegenhaltungen:
- DE-A1-102008 036 131
- US-A- 5 465 390
- US-B1- 6 477 376
- CHRISTIAN WEWETZER ET AL: "Experimental Evaluation of UMTS and Wireless LAN for Inter-Vehicle Communication" TELECOMMUNICATIONS, 2007. ITST '07. 7TH INTERNATIONAL CONFERENCE ON ITS,, 1. Juni 2007 (2007-06-01), Seiten 1-6, XP031130350 ISBN: 978-1-4244-1177-1
- SAMER AMMOUN ET AL: "Performance analysis of intervehicle Communication for Collaborative Traffic Applications" TELECOMMUNICATIONS, 2007. ITST '07. 7TH INTERNATIONAL CONFERENCE ON ITS,, 1. Juni 2007 (2007-06-01), Seiten 1-6, XP031130312 ISBN: 978-1-4244-1177-1
- AMMOUN S ET AL: "Crossroads risk assessment using GPS and inter-vehicle communications" 20070611, Bd. 1, Nr. 2, 11. Juni 2007 (2007-06-11), Seiten 95-101, XP006028775

## Beschreibung

Die vorliegende Erfindung betrifft ein Verfahren zur Kommunikation eines Fahrzeugs mit einem anderen Fahrzeug oder mit einer Infrastruktureinrichtung, welche eine bestimmte, von der aktuellen Position des Fahrzeugs abhängige Reichweite aufweist. Die vorliegende Erfindung betrifft ferner eine entsprechende Vorrichtung zur Kommunikation.

Zukünftig wird die Fahrzeug-zu-Fahrzeug-Kommunikation (im Folgenden kurz C2C-Kommunikation) und die Fahrzeug-zu-Infrastruktur-Kommunikation (im Folgenden kurz C2I-Kommunikation) für die Steuerung von Fahrzeugen, insbesondere für Fahrsicherheits- und Fahrassistenzsysteme, immer bedeutsamer werden. Die C2C-Kommunikation und die C2I-Kommunikation werden im Folgenden mit dem Begriff C2X-Kommunikation zusammengefasst.

Für ein ordnungsgemäßes Funktionieren der Steuerung sowie der Fahrsicherheits- und Fahrassistenzsysteme, welche die C2X-Kommunikation nutzen, ist es notwendig, die Reichweite der C2X-Kommunikation, das heißt die Reichweite der für die Kommunikation genutzten Radiowellen oder elektromagnetischen Wellen eines anderen Wellenlängenbereichs, möglichst genau zu kennen wie zum Beispiel in der Druckschrift Ammoun S. et al., "Crossroads risk assessment using GPS and inter-vehicle communications, "IET, Juni 2007, offenbart. Mit der Reichweite wird die maximale Entfernung.zwischen Sender und Empfänger bezeichnet, bei der gerade noch eine Kommunikation zwischen Sender und Empfänger möglich ist.

In der Druckschrift US 2005/0137786 A1 wird im Zusammenhang mit der GPS-Kommunikation beschrieben, dass es zur Verbesserung der Kommunikation per Gesetz verboten werden soll, dass Lastkraftwagen an beiden Seiten eines Autos fahren. Ferner kann bei einer permanenten starken Dämpfung des GPS-Signals aufgrund einer Tunnelfahrt oder im Zentrum einer großen Stadt dieses durch die Verwendung von Führersystemen behoben werden. Ferner hat das bekannte System ein Diagnosesystem, das verifiziert, ob das System richtig arbeitet. Diese Verbesserungsvorschläge, deren zugrunde liegendes Problem in einer nicht ausreichenden Reichweite der Kommunikation besteht, adressieren die im vorangegangenen Absatz geschilderte Problematik nur teilweise.

Die Aufgabe der vorliegenden Erfindung besteht somit darin, ein einfaches Verfahren anzugeben beziehungsweise eine kostengünstige Vorrichtung zu schaffen, mit welchen die ordnungsgemäße Funktionsfähigkeit des Systems basierend auf einer Überwachung der Reichweite ständig gewährleistet werden kann.

Die obige Aufgabe wird durch ein Verfahren mit den Merkmalen des Anspruchs 1 gelöst.

Insbesondere wird die zu erwartende Reichweite der Kommunikation unter anderem aus der von der aktuellen Position des Fahrzeugs abhängigen Umgebungsbeschaffenheit abgeleitet.

Die oben angegebene Erfindung beruht auf der Nutzung der an sich bekannten Tatsache, dass die Reichweite der C2X-Kommunikation von der Umgebungsbeschaffenheit abhängig ist. Dieser Zusammenhang wird für die Abschätzung der Reichweite der C2X-Kommunikation und somit für die Einschätzung der Funktionsfähigkeit des Systems verwendet. Der im Folgenden verwendete Begriff Umgebungsbeschaffenheit umfasst die geographische Beschaffenheit der Umgebung der aktuellen Position des Fahrzeugs, das heißt das Oberflächenprofil der Umgebung oder die Wasserbedeckung, die Bepflanzung der Umgebung, die Bebauungsstruktur sowie Wettereinflüsse wie Regen oder Schnee etc. Hierbei beinhaltet die Bebauungsstruktur die Anzahl und die Anordnung der Gebäude oder anderer Bauwerke wie Tunnel sowie deren Größe und Höhe. Die Umgebungsbeschaffenheit bestimmt die Dämpfung der für die Kommunikation verwendeten Funkwellen oder Wellen eines anderen Bereichs des Spektrums und somit deren Reichweite. Dieses Phänomen wird auch als Freiraumdämpfung bezeichnet.

Die Umgebungsbeschaffenheit beinhaltet ferner statische und dynamische Anteile. Die Bebauung der Umgebung der aktuellen Position des Fahrzeugs oder das Wetter können sich dynamisch ändern, während beispielsweise das Oberflächenprofil der Umgebung der aktuellen Position des Fahrzeugs im Wesentlichen unverändert, das heißt statisch, bleiben sollte.

Aus der Umgebungsbeschaffenheit kann dann anhand von Modellrechnungen die zu erwartende Reichweite der C2X-Kommunikation ermittelt werden. Diese erwartete Reichweite kann dann dem Fahrer angezeigt werden oder es kann, insbesondere bei besonders niedriger Reichweite unterhalb eines vorgegebenen Reichweite-Schwellwertes, eine Warnung an den Fahrer dahingehend ausgegeben werden, dass das System aktuell nicht oder eingeschränkt funktionsfähig ist. Die aus der Umgebungsbeschaffenheit ermittelte Information zur Reichweite kann im Fahrzeug außerdem dazu verwendet werden, um die Systeme im Fahrzeug, welche die C2X-Kommunikation nutzen, entsprechend anzupassen. So können beispielsweise Erkennungsschwellen bei geringer Reichweite niedriger gewählt werden. Alternativ oder zusätzlich könnte ferner bei einer besonders niedrigen oder hohen Reichweite die Sendeleistung des Senders oder die Empfindlichkeit des Empfängers entsprechend korrigiert werden.

Um die aktuelle Position des Fahrzeugs zu ermitteln, wird häufig ein globales Positionierungssystem, insbesondere ein Satellitennavigationssystem wie GPS, Galileo, GLONASS (Russland), Kompass (China), IRNSS (Indien), etc. verwendet. Ebenso kann ein lokales Positionierungssystem verwendet werden.

Bei dem Fahrzeug handelt es sich beispielsweise um ein Kraftfahrzeug, wie Auto, Bus oder Lastkraftwagen, oder aber auch um ein Schienenfahrzeug, ein Schiff, Luftfahrzeug, wie Helikopter oder Flugzeug, oder beispielsweise um ein Fahrrad.

In einem Ausführungsbeispiel der vorliegenden Erfindung kann die von der aktuellen Position des Fahrzeugs abhängige Umgebungsbeschaffenheit mittels mindestens eines Umfeldsensors erfasst werden. Diese Erfassung ist insbesondere für die sich dynamisch ändernden Anteile der Umgebungsbeschaffenheit von Vorteil. In den Umfeldsensoren können elektromagnetische Wellen aus jedem Wellenlängenbereich, das heißt Licht-, Infrarot-, Radio- und/oder Ultraschallwellen zur Analyse des Umfeldes der aktuellen Position des Fahrzeugs verwendet werden.

Alternativ oder zusätzlich kann die von der aktuellen Position des Fahrzeugs abgängige Umgebungsbeschaffenheit aus einer im Fahrzeug gespeicherten oder aus einer über die Infrastruktureinrichtung zugängliche digitale Karte ermittelt werden. Im zuletzt genannten Fall kann die digitale Karte auf einem zentralen Server gespeichert sein. Diese Möglichkeit der Ermittlung von Informationen über die Umgebungsbeschaffenheit ist insbesondere für deren statische Anteile, beispielsweise geographische Informationen, nützlich.

Unter dem Begriff "digitale Karte" werden bei der vorliegenden Erfindung neben in digitaler Form vorliegenden Karten für ein lokales oder globales Navigationssystem auch Karten für fortschrittliche Fahrassistenzsysteme (ADAS, Advanced Driver Assistance Systems) verstanden, ohne dass eine Navigation stattfindet.

Die Genauigkeit der Bestimmung der Reichweite der Kommunikation kann dadurch erhöht werden, dass die Reichweite zusätzlich aus mindestens einem in dem Fahrzeug gespeicherten Wert der Reichweite abgeleitet wird, welcher bei einem früheren Aufenthalt an der aktuellen Position des Fahrzeugs ermittelt wurde. In einem Ausführungsbeispiel ist der mindestens eine gespeicherte Wert der Reichweite das Maximum aller, bei früheren Aufenthalten an der aktuellen Position ermittelten Werten der Reichweite. Diese zuletzt angegebene Vorgehensweise ermöglicht es, Rechenzeit und Speicherplatz zu sparen, da jeweils nur ein einziger Wert zu einer aktuellen Position verarbeitet beziehungsweise gespeichert wird. In einem weiteren Ausführungsbeispiel können die jeweiligen Reichweite-Werte verknüpft mit einem Zeitstempel gespeichert werden, wobei der Zeitstempel den Tag und gegebenenfalls die Uhrzeit des Erreichens der entsprechenden Reichweite der Kommunikation an der jeweiligen Position beinhaltet. Die Reichweiten werden dann jeweils nur über einen vorbestimmten Zeitraum hinweg gespeichert, um jeweils nur aktuelle Daten vorzuhalten. Entsprechend fließen dann nur Maximum-Reichweiten in die Berechnung einer zu erwartenden Reichweite ein, die nicht älter als ein vorgegebener Schwellwert sind.

Zur Ermittlung der Reichweite eines früheren Zeitpunkts können zudem Daten der Kommunikation hergezogen werden, z.B. die maximale Entfernung des Kommunikationspartners. Diese so ermittelten Reichweite-Daten können außerdem im Hinblick auf die Himmelsrichtung oder den Straßenverlauf getrennt ausgewertet werden.

Bei der Bestimmung der Reichweite der Kommunikation ist ferner zu beachten, dass die Abstrahlcharakteristik des Fahrzeugs typischerweise nicht in alle Richtungen des Raumes gleich ist. Je nach Antennenposition unterscheiden sich vor allem die Reichweiten in Fahrtrichtung und gegen die Fahrtrichtung des Fahrzeugs. Demzufolge wird in einem bevorzugten Ausführungsbeispiel der vorliegenden Erfindung die Reichweite der Kommunikation zusätzlich aus der Abstrahlcharakteristik des jeweiligen Fahrzeugs abgeleitet. Zur Vereinfachung der Berechnung kann die Umgebungsbeschaffenheit in mehrere Umgebungsklassen eingeteilt werden, welchen jeweils eine zu erwartende Reichweite zugeordnet ist. Denkbar sind Umgebungsklassen wie:
- flaches Land,
- hügeliges Land,
- gebirgiges Land,
- Wald,
- städtisch, schwach bebaut,
- städtisch, sehr stark bebaut.

Die angegebenen Umgebungsklassen sind nicht abschließend, weitere können in beliebiger Anzahl definiert werden. Zusätzlich zur Umgebungsklasse können die Reichweiten noch in Bezug auf das Fahrzeugmodell unterschieden werden.

Um in einem Ausführungsbeispiel die zu erwartende Reichweite für die jeweilige Umgebungsklasse und eventuell zusätzlich für jedes Fahrzeugmodell zu ermitteln, werden beispielsweise während der Entwicklung eines Fahrzeugmodells Simulationen für die jeweiligen Umgebungsklassen durchgeführt. Alternativ können auch Fahrten in Referenzumgebungen durchgeführt werden und dabei die zu erwartenden Reichweiten bestimmt werden. Diese Werte werden dann jeweils im Fahrzeug gespeichert, bevor es ausgeliefert wird oder, falls notwendig, neue Werte bei einem Servicetermin aufgespielt. Falls nicht noch zusätzlich nach Fahrzeugmodell unterschieden wird, könnten die für verschiedene Fahrzeugmodelle ermittelten Reichweiten-Werte für eine Umgebungsklasse gemittelt werden.

Die obige Aufgabe wird ferner durch eine Vorrichtung mit den Merkmalen des Anspruchs 8 gelöst.

Die erfindungsgemäße Vorrichtung zeichnet sich insbesondere dadurch aus, dass die zu erwartende Reichweite der Kommunikation unter anderem aus der von der aktuellen Position abhängigen Umgebungsbeschaffenheit ableitbar ist.

Die in den abhängigen Ansprüchen angegebenen Weiterbildungen der erfindungsgemäßen Vorrichtung weisen die oben hinsichtlich des erfindungsgemäßen Verfahrens genannten Eigenschaften und Vorteile auf.

In einem weiteren Ausführungsbeispiel wird bei Unterschreitung eines vorgegebenen Schwellwertes der Reichweite der Kommunikation dem Fahrer signalisiert, dass die Vorrichtung nicht oder nur eingeschränkt funktionsfähig ist. Dies kann beispielsweise durch ein optisches oder akustisches Signal erfolgen.

Weitere Vorteile, Merkmale und Anwendungsmöglichkeiten der vorliegenden Erfindung ergeben sich auch aus der nachfolgenden Beschreibung von Ausführungsbeispielen und der einzigen Figur. Dabei bilden alle beschriebenen und/oder bildlich dargestellten Merkmale den Gegenstand der vorliegenden Erfindung, auch unabhängig von ihrer Zusammenfassung in den Ansprüchen oder deren Rückbezüge.

Nachfolgend wird die Erfindung anhand der C2C-Kommunikation erläutert. Analog kann sie auch für die C2I-Kommunikation realisiert werden. Hierbei dienen als Infrastruktureinrichtungen beispielsweise Ampeln, Verkehrsschilder, Anzeigetafeln oder dergleichen.

Es zeigt schematisch:

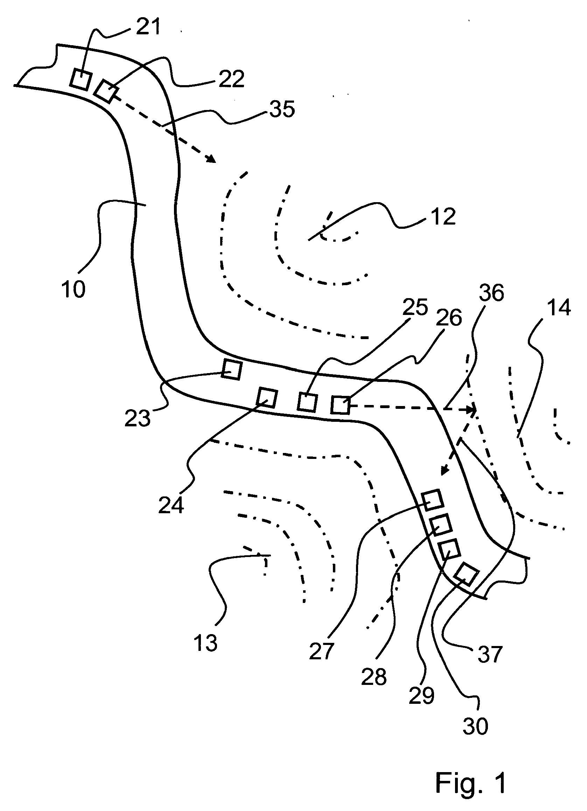

Fig. 1 ein erstes, ein zweites und ein drittes Ausführungsbeispiel des erfindungsgemäßen Verfahrens.

Auf einer Straße 10, welche recht kurvenreich ist, sind Fahrzeuge 21, 22, 23, 24, 25, 26, 27, 28, 29 und 30, beispielsweise Autos, Motorräder oder Lastkraftwagen, unterwegs. Die Umgebungsbeschaffenheit ist ferner gekennzeichnet durch drei, neben der Straße 10 angeordnete Erhebungen 12, 13 und 14. Die Erhebungen (Hügel, Berge) 12, 13 und 14 sind durch Höhenlinien (strichpunktierte Linien) angedeutet.

Das Fahrzeug 22 könnte nun mit den ihm vorausfahrenden Fahrzeugen 23, 24, 25, 26, 27, 28, 29 und 30 kommunizieren, beispielsweise in Bezug auf einen voraus liegenden Stau, dessen Ende beispielsweise die Fahrzeuge 27 bis 30 bilden.

Die Abstrahlcharakteristik des Fahrzeugs 22 ist insbesondere durch eine in Fahrtrichtung nach vorn ausgerichtete Abstrahlung der Radiowellen (veranschaulicht durch Pfeil 35) gekennzeichnet. Beim in Figur 1 gezeigten Ausführungsbeispiel treffen die in Fahrtrichtung des Fahrzeugs 22 vorwiegend abgestrahlten Radiowellen zur C2C-Kommunikation jedoch auf die Erhebung 12. Die Daten zur Erhebung 12 könnte das Fahrzeug beispielsweise aus einer in dem Fahrzeug gespeicherten digitalen Karte erhalten. Alternativ können die Daten zur Erhebung 12 auch aus Messwerten eines im Fahrzeug angeordneten Radarsensors bestimmt werden. Aus den Abmessungen der Erhebung 12 und deren Lage zur Straße beziehungsweise zur Fortbewegungsrichtung des Fahrzeugs wird die Reichweite hinsichtlich der Kommunikation mit den Fahrzeugen 23-30 als gering eingestuft, beispielsweise kann sie wenige Meter betragen. Die zu erwartende Reichweite liegt daher unter einem vorgegebenen Schwellwert. Entsprechend wird dem Fahrer angezeigt, dass die C2C- Kommunikation und entsprechend der im Fahrzeug angeordnete Staumelder nur eingeschränkt funktionieren. Eine Kommunikation des Fahrzeugs 22 mit den Fahrzeugen 27 bis 30, welche dem Fahrzeug 22 die Informationen über den Stau übermitteln könnte, ist daher nicht zu erwarten.

Demgegenüber werden in einem zweiten Ausführungsbeispiel die vorwiegend in Fahrtrichtung ausgesandten Wellen (veranschaulicht durch Pfeil 36) des C2C-Kommunikationssenders des Fahrzeugs 26 von der Erhebung 14 reflektiert (veranschaulicht durch Pfeil 37). Die bei der C2C-Kommunikation des Fahrzeugs 26 verwendeten elektromagnetischen Wellen weisen somit aufgrund der Beschaffenheit der Erhebung 14 eine größere Reichweite auf, als die Wellen der C2C-Kommunikation des Fahrzeugs 22. Die Struktur der Erhebung 14 kann analog zum ersten Ausführungsbeispiel mittels einer in dem Fahrzeug gespeicherten digitalen Karte oder durch einen Umgebungssensor ermittelt werden. Die Berechnung der Reichweite der C2C-Kommunikation des Fahrzeugs 26 erfolgt unter Berücksichtigung des Oberflächenprofils der Umgebung des Fahrzeugs 26 und somit unter Berücksichtigung der Erhebung 14. Die zu erwartende Reichweite der C2C-Kommunikation ist so groß, dass keine Anzeige über eingeschränkte oder fehlende C2C-Kommunikation erfolgt. In der Regel wird daher dem Fahrer des Fahrzeugs 26 eine durch die Fahrzeuge 27 bis 30 gebildete Stauende - Warnung vorab übermittelt werden.

In einem dritten Ausführungsbeispiel erkennt die erfindungsgemäße Vorrichtung an der aktuellen Position der Fahrzeuge 21 bis 30 und der Höhe der Erhebungen 12 bis 14, dass sich diese in einem hügeligen Land befinden. Demzufolge wird für sie die Umgebungsklasse "hügeliges Land" ermittelt. Für jede Umgebungsklasse haben die Fahrzeuge 22 und 26 einen zu erwartenden Wert der Reichweite gespeichert, welcher auch gegebenenfalls für das jeweilige Fahrzeugmodell spezifisch ist. Je nachdem, ob der gespeicherte Wert der Reichweite unterhalb eines vorgegebenen Schwellwerts liegt, wird dem Fahrer eine Warnung angezeigt, dass nur eine eingeschränkte oder keine C2C-Kommunikation erfolgt.

### Bezugszeichenliste

- 10: Straße
- 12, 13, 14: Erhebung
- 21, 22, 23: Fahrzeug
- 24, 25, 26: Fahrzeug
- 27, 28, 29: Fahrzeug
- 30: Fahrzeug
- 35, 36, 37: Hauptrichtung der Ausbreitung der Wellen der C2C-Kommunikation

## Patentansprüche

1. Verfahren zur Kommunikation eines Fahrzeugs (22,26) mit einem anderen Fahrzeug (23, 24, 25, 26, 27, 28,29, 30) oder mit einer Infrastruktureinrichtung, welche eine bestimmte, von der aktuellen Position des Fahrzeugs (22,26) abhängige Reichweite aufweist, die Reichweite der Kommunikation unter anderem aus der von der aktuellen Position des Fahrzeugs (22,26) abhängigen Umgebungsbeschaffenheit (12,14) abgeleitet wird
**dadurch kennzeichnet,**
**dass** die Reichweite der Kommunikation zusatzlich aus mindestens einem in dem Fahrzeug gespeicherten Wert der Reichweite abgeleitet wird, welcher bei einem früheren Aufenthalt an der aktuellen Position des Fahrzeugs ermittelt wurde, wobei der gespeicherte Wert der Reichweite der Kommunikation aus einer digitalen Karte,
entnommen wird.

2. Verfahren nach Anspruch 1, **dadurch gekennzeichnet, dass** die von der aktuellen Position des Fahrzeugs (22,26) abhängige Umgebungsbeschaffenheit mittels mindestens eines Umfeldsensors erfasst wird.

3. Verfahren nach einem der vorhergehenden Ansprüche, **dadurch gekennzeichnet, dass** die von der aktuellen Position des Fahrzeugs (22,26) abhängige Umgebungsbeschaffenheit (12,14) aus einer im Fahrzeug gespeicherten oder aus einer über eine Infrastruktureinrichtung zugängliche digitale Karte ermittelt wird.

4. Verfahren nach einem der vorhergehenden Ansprüche, **dadurch gekennzeichnet, dass** die Reichweite der Kommunikation zusätzlich aus mindestens einem in dem Fahrzeug (22,26) gespeicherten Wert der Reichweite abgeleitet wird, welcher bei einem früheren Aufenthalt an der aktuellen Position des Fahrzeugs (22,26) ermittelt wurde.

5. Verfahren nach Anspruch 4, **dadurch gekennzeichnet, dass** der mindestens eine gespeicherte Wert der Reichweite das Maximum aller, bei früheren Aufenthalten an der aktuellen Position ermittelten Werten der Reichweite ist.

6. Verfahren nach einem der vorhergehenden Ansprüche, **dadurch gekennzeichnet, dass** die Reichweite der Kommunikation zusätzlich aus der Abstrahlcharakteristik des jeweiligen Fahrzeugs (22,26) abgeleitet wird.

7. Verfahren nach einem der vorhergehenden Ansprüche, **dadurch gekennzeichnet, dass** die Umgebungsbeschaffenheit (12,14) in mehrere Umgebungsklassen eingeteilt wird.

8. Vorrichtung zur Kommunikation eines Fahrzeugs (22,26) mit einem anderen Fahrzeug (23, 24, 25, 26, 27, 28,29, 30) oder mit einer Infrastruktureinrichtung, wobei die Kommunikation eine bestimmte, von der aktuellen Position des Fahrzeugs (22,26) abhängige Reichweite aufweist, die Reichweite der Kommunikation unter anderem aus der von der aktuellen Position des Fahrzeugs (22,26) abhängigen Umgebungsbeschaffenheit (12, 14) ableitbar ist
**dadurch kennzeichnet, dass** die Vorrichtung Mittel umfasst, die Reichweite der Kommunikation zusätzlich aus mindestens einem in dem Fahrzeug gespeicherten Wert der Reichweite Abzuleiten welcher bei einem früheren Aufenthalt an der aktuellen Position des Fahrzeugs aus einer digitalen Karte entnommen wird.

9. Vorrichtung nach Anspruch 8, **dadurch gekennzeichnet, dass** die Vorrichtung Mittel umfasst, die von der aktuellen Position des Fahrzeugs (22,26) abhängige Umgebungsbeschaffenheit (12,14) mittels mindestens eines Umfeldsensors zu erfassen.

10. Vorrichtung nach einem der Ansprüche 8 bis 9, **dadurch gekennzeichnet, dass** die Vorrichtung Mittel umfasst, die von der aktuellen Position des Fahrzeugs (22,26) abhängige Umgebungsbeschaffenheit (12,14) aus einer im Fahrzeug (22,26) gespeicherten oder aus einer über die Infrastruktureinrichtung zugängliche digitale Karte zu ermitteln.

11. Vorrichtung nach einem der Ansprüche 8 bis 10, **dadurch gekennzeichnet, dass** die Vorrichtung Mittel umfasst, die Reichweite der Kommunikation zusätzlich aus mindestens einem in dem Fahrzeug (22,26) gespeicherten Wert der Reichweite abzuleiten, welcher bei einem früheren Aufenthalt an der aktuellen Position des Fahrzeugs (22,26) ermittelt wurde.

12. Vorrichtung nach Anspruch 11, **dadurch gekennzeichnet, dass** der mindestens eine gespeicherte Wert der Reichweite das Maximum aller, bei früheren Aufenthalten an der aktuellen Position ermittelten Werten der Reichweite ist.

13. Vorrichtung nach einem der Ansprüche 8 bis 12, **dadurch**
**gekennzeichnet, dass** die Vorrichtung Mittel umfasst, die Reichweite der Kommunikation zusätzlich aus der Ausrichtung der zur Kommunikation verwendeten Antenne abzuleiten.

14. Vorrichtung nach einem der Ansprüche 8 bis 13, **dadurch gekennzeichnet, dass** die Umgebungsbeschaffenheit in mehrere Umgebungsklassen einteilbar ist.

15. Vorrichtung nach einem der Ansprüche 8 bis 14, **dadurch**
**gekennzeichnet, dass** die Vorrichtung Mittel umfasst, bei Unterschreitung eines vorgegebenen Schwellwertes der Reichweite der Kommunikation dem Fahrer des Fahrzeugs (22, 26) zu signalisieren, dass die Vorrichtung nicht funktionsfähig ist.

## Claims

1. Method for a vehicle (22, 26) to communicate with another vehicle (23, 24, 25, 26, 27, 28, 29, 30) or with an infrastructure device which has a particular range which is dependent on the current position of the vehicle (22, 26), wherein the range of the communication is derived inter alia from the nature of the surroundings (12, 14), which is dependent on the current position of the vehicle (22, 26)
**characterized in that** the range of the communication is additionally derived from at least one value - stored in the vehicle - for the range, said value having been ascertained during an earlier residence at the current position of the vehicle.

2. Method according to Claim 1, **characterized in that** the nature of the surroundings, which is dependent on the current position of the vehicle (22, 26), is captured by means of at least one ambient sensor.

3. Method according to one of the preceding claims, **characterized in that** the nature of the surroundings (12, 14), which is dependent on the current position of the vehicle (22, 26), is ascertained from a digital map stored in the vehicle or from a digital map which is accessible via an infrastructure device.

4. Method according to one of the preceding claims, **characterized in that** the range of the communication is additionally derived from at least one value - stored in the vehicle (22, 26) - for the range, said value having been ascertained during an earlier residence at the current position of the vehicle (22, 26).

5. Method according to Claim 4, **characterized in that** the at least one stored value for the range is the maximum of all values for the range which have been ascertained during earlier residences at the current position.

6. Method according to one of the preceding claims, **characterized in that** the range of the communication is additionally derived from the radiation characteristic of the respective vehicle (22, 26).

7. Method according to one of the preceding claims, **characterized in that** the nature of the surroundings (12, 14) is classified into a plurality of classes of surroundings.

8. Apparatus for a vehicle (22, 26) to communicate with another vehicle (23, 24, 25, 26, 27, 28, 29, 30) or with an infrastructure device, wherein the communication has a particular range which is dependent on the current position of the vehicle (22, 26), wherein the range of the communication can be derived inter alia from the nature of the surroundings (12, 14), which is dependent on the current position of the vehicle (22, 26) **characterized in that** the apparatus comprises means to additionally derive the range of the communication from at least one value - stored in the vehicle - for the range, said value being taken from a digital map during an earlier residence at the current position of the vehicle.

9. Apparatus according to Claim 8, **characterized in that** the apparatus comprises means to capture the nature of the surroundings (12, 14), which is dependent on the current position of the vehicle (22, 26), by means of at least one ambient sensor.

10. Apparatus according to one of Claims 8 and 9, **characterized in that** the apparatus comprises means to ascertain the nature of the surroundings (12, 14), which is dependent on the current position of the vehicle (22, 26), from a digital map stored in the vehicle (22, 26) or from a digital map which is accessible via the infrastructure device.

11. Apparatus according to one of Claims 8 to 10, **characterized in that** the apparatus comprises means to additionally derive the range of the communication from at least one value - stored in the vehicle (22, 26) - for the range, said value having been ascertained during an earlier residence at the current position of the vehicle (22, 26).

12. Apparatus according to Claim 11, **characterized in that** the at least one stored value for the range is the maximum of all values for the range which have been ascertained during earlier residences at the current position.

13. Apparatus according to one of Claims 8 to 12, **characterized in that** the apparatus comprises means to additionally derive the range of the communication from the orientation of the antenna which is used for the communication.

14. Apparatus according to one of Claims 8 to 13, **characterized in that** the nature of the surroundings can be classified into a plurality of classes of surroundings.

15. Apparatus according to one of Claims 8 to 14, **characterized in that** the apparatus comprises means to signal to the driver of the vehicle (22, 26) that the apparatus is not functional in the event of a drop below a prescribed threshold value for the range of the communication.

## Revendications

1. Procédé de communication d'un véhicule (22, 26) avec un autre véhicule (23, 24, 25, 26, 27, 28, 29, 30) ou avec un appareil d'infrastructure, laquelle possède une portée définie qui dépend de la position actuelle du véhicule (22, 26), la portée de la communication étant dérivée entre autres de la nature de l'environnement (12, 14) dépendant de la position actuelle du véhicule (22, 26),
**caractérisé en ce**
**que** la portée de la communication est en outre dérivée d'au moins une valeur de la portée enregistrée dans le véhicule, laquelle a été déterminée lors d'un séjour précédent à la position actuelle du véhicule, la valeur enregistrée de la portée de la communication étant prélevée d'une carte numérique.

2. Procédé selon la revendication 1, **caractérisé en ce que** la nature de l'environnement dépendant de la position actuelle du véhicule (22, 26) est détectée au moyen d'au moins un capteur d'environnement.

3. Procédé selon l'une des revendications précédentes, **caractérisé en ce que** la nature de l'environnement (12, 14) dépendant de la position actuelle du véhicule (22, 26) est déterminée à partir d'une carte numérique enregistrée dans le véhicule ou accessible par le biais d'un appareil d'infrastructure.

4. Procédé selon l'une des revendications précédentes, **caractérisé en ce que** la portée de la communication est en outre dérivée d'au moins une valeur de la portée enregistrée dans le véhicule (22, 26), laquelle a été déterminée lors d'un séjour précédent à la position actuelle du véhicule (22, 26).

5. Procédé selon la revendication 4, **caractérisé en ce que** l'au moins une valeur enregistrée de la portée est le maximum de toutes les valeurs de la portée déterminées lors des séjours précédents à la position actuelle.

6. Procédé selon l'une des revendications précédentes, **caractérisé en ce que** la portée de la communication est en outre dérivée de la caractéristique de rayonnement du véhicule (22, 26) correspondant.

7. Procédé selon l'une des revendications précédentes, **caractérisé en ce que** la nature de l'environnement (12, 14) est divisée en plusieurs classes d'environnement.

8. Dispositif de communication d'un véhicule (22, 26) avec un autre véhicule (23, 24, 25, 26, 27, 28, 29, 30) ou avec un appareil d'infrastructure, la communication possédant une portée définie qui dépend de la position actuelle du véhicule (22, 26), la portée de la communication pouvant être dérivée entre autres de la nature de l'environnement (12, 14) dépendant de la position actuelle du véhicule (22, 26),
**caractérisé en ce que** le dispositif comprend des moyens pour dériver la portée de la communication en outre d'au moins une valeur de la portée enregistrée dans le véhicule, laquelle a été prélevée d'une carte numérique lors d'un séjour précédent à la position actuelle du véhicule.

9. Dispositif selon la revendication 8, **caractérisé en ce que** le dispositif comprend des moyens pour détecter la nature de l'environnement (12, 14) dépendant de la position actuelle du véhicule (22, 26) au moyen d'au moins un capteur d'environnement.

10. Dispositif selon l'une des revendications 8 et 9, **caractérisé en ce que** le dispositif comprend des moyens pour déterminer la nature de l'environnement (12, 14) dépendant de la position actuelle du véhicule (22, 26) à partir d'une carte numérique enregistrée dans le véhicule (22, 26) ou accessible par le biais de l'appareil d'infrastructure.

11. Dispositif selon l'une des revendications 8 à 10, **caractérisé en ce que** le dispositif comprend des moyens pour dériver la portée de la communication en plus à partir d'au moins une valeur de la portée enregistrée dans le véhicule (22, 26), laquelle a été déterminée lors d'un séjour précédent à la position actuelle du véhicule (22, 26).

12. Dispositif selon la revendication 11, **caractérisé en ce que** l'au moins une valeur enregistrée de la portée est le maximum de toutes les valeurs de la portée déterminées lors des séjours précédents à la position actuelle.

13. Dispositif selon l'une des revendications 8 à 12, **caractérisé en ce que** le dispositif comprend des moyens pour dériver la portée de la communication en plus de l'orientation de l'antenne utilisée pour la communication.

14. Dispositif selon l'une des revendications 8 à 13, **caractérisé en ce que** la nature de l'environnement peut être divisée en plusieurs classes d'environnement.

15. Dispositif selon l'une des revendications 8 à 14, **caractérisé en ce que** le dispositif comprend des moyens pour, dans le cas où la portée de la communication devient inférieure à une valeur de seuil prédéfinie, signaler au conducteur du véhicule (22, 26) que le dispositif n'est pas apte à fonctionner.
